# EUROPÄISCHE PATENTSCHRIFT

(11) **EP 3 273 114 B1**
(45) Veröffentlichungstag und Bekanntmachung des Hinweises auf die Patenterteilung: **02.10.2019**
(21) Anmeldenummer: 17179516.4
(22) Anmeldetag: 04.07.2017
(51) Int. Cl.: F16J 15/02, B61D 17/04, F16J 15/10

(54) **VORRICHTUNG MIT EINER DICHTEINRICHTUNG**
DEVICE WITH A SEAL
DISPOSITIF COMPRENANT UNE ÉTANCHÉITÉ

(30) Priorität: 20.07.2016 DE 102016113377
(43) Veröffentlichungstag der Anmeldung: 24.01.2018
(73) Patentinhaber: Bombardier Transportation GmbH, 10785 Berlin (DE)
(72) Erfinder: Böthig, Tobias, 02625 Bautzen (DE)
(74) Vertreter: Zimmermann & Partner Patentanwälte mbB

(56) Entgegenhaltungen:
- CN-A- 102 889 384
- CN-U- 201 568 566
- DE-A1- 10 229 621
- JP-U- S5 082 511

## Beschreibung

Die Erfindung betrifft eine Vorrichtung mit einer Dichteinrichtung, ein Schienenfahrzeug und ein Verfahren zum Montieren einer Dichteinrichtung in der Vorrichtung.

Aluminiumwagenkästen von Schienenfahrzeugen sind normalerweise mit C-Schienen ausgestattet, die zur Befestigung von Großgeräten und/oder Innenausbaukomponenten dienen. Wenn derartige C-Schienen durch verschiedene Fahrzeugbereiche verlaufen, die voneinander getrennt werden müssen, sind spezielle Wände und Abdichtmaßnahmen erforderlich. Eine Trennung und Abdichtung der Fahrzeugbereiche kann aufgrund von Brandschutzvorgaben notwendig sein. Außerdem kann bei Tunnel- und/oder Begegnungsfahrten ein unterschiedliches Druckniveau in zwei benachbarten Fahrzeugbereichen auftreten, so dass ebenfalls eine Trennung und Abdichtung erforderlich ist.

Öffnungen im Bereich von C-Schienen werden üblicherweise durch ein Anbringen und Verschweißen von zusätzlichen Blechen oder durch ein Auffüllen mit einer geeigneten Vergussmasse oder einem Schaum verschlossen. Nachteilig ist bei diesen Varianten, dass eine Demontage entweder gar nicht oder nur eine mit einem sehr hohem Aufwand möglich ist. Auch eine Montage ist sehr aufwendig. Bei einer Verschweißung handelt es sich um eine strukturverändernde Maßnahme, die Einfluss auf eine Festigkeit und eine Lebensdauer eines Bauteils haben kann. Daher ist eine Schweißverbindung vom lokalen Spannungsniveau abhängig. Gerade bei Aluminiumwagenkästen sind Schweißverbindungen daher nur selten einsetzbar. Bisherige Alternativen wie z.B. ein Einsatz von Vergussmassen oder Schaum erfordern einen hohen Handhabungs- und Arbeitsschutzaufwand, denn Vergussmassen und Schaum sind chemisch oder physikalisch abbindend. Zudem müssen abzudichtende Stellen aufwendig gereinigt und zusätzlich in einem bestimmten Zeitraum baulich begrenzt werden, um z.B. ein Aufbringen zu ermöglichen einen Verguss lokal zu begrenzen. C-Schienen müssen jedoch während der Montage des Fahrzeuges für das Einführen von Nutensteinen zugänglich bleiben.

Somit stellen sowohl Schweißarbeiten als auch ein Aufbringen von Vergussmasse oder Schaum eine Einschränkung eines Montageprozesses dar. Außerdem müssen zusätzliche Einfädelstellen durch mechanische Bearbeitung der C-Schienen geschaffen werden, denn das Aufbringen der Vergussmasse oder des Schaumes ist nur bis zu einem bestimmten Ausbaugrad möglich. Andernfalls können eingebaute Komponenten den Zugang versperren.

Die Druckschrift CN 102889384 A beschreibt einen Stopfen mit einem flexiblen Element, das eine Durchgangsbohrung aufweist. Die Durchgangsbohrung dient zur Durchführung eines Bolzens, an dessen Ende eine Flügelschraube angebracht ist. Der Stopfen dient zur Abdichtung von Löchern mit unterschiedlichen Abmessungen in Tanks aus verschiedenen Werkstoffen. Nachteilig ist hierbei, dass der Stopfen nur für annähernd runde Löcher verwendbar ist.

Die Druckschriften CN 102278471 A und CN 202170996 U offenbaren einen Bolzen mit zwei aufgeschobenen Dichtungen. Die Dichtungen sind zur Mitte des Bolzens hin konkav und zu den Enden des Bolzens hin konvex. Diese Anordnung dient zur Abdichtung von Löchern mit unterschiedlichen Abmessungen in Tanks aus verschiedenen Werkstoffen. Nachteilig ist auch hier, dass die Anordnung nur für annähernd runde Löcher verwendbar ist.

Der Erfindung liegt daher die Aufgabe zu Grunde, eine Vorrichtung und ein Verfahren zu schaffen, bei denen eine C-Schiene gegenüber einer Trennwand abgedichtet wird und das Dichtmittel einfach montier- und demontierbar ist.

Diese Aufgabe wird erfindungsgemäß durch eine Vorrichtung mit einer Dichteinrichtung nach Anspruch 1 gelöst. Weiterhin wird die Aufgabe mit einem Verfahren nach Anspruch 15 zum Montieren einer Dichteinrichtung in der Vorrichtung gelöst. Vorteilhafte Ausgestaltungen der Erfindung sind in den Unteransprüchen enthalten.

Erfindungsgemäß besteht die Lösung der Aufgabe in einer Vorrichtung mit einer Dichteinrichtung, bei der mindestens ein verformbarer Dichtkörper zwischen einem Frontplattenelement und einem Deckplattenelement angeordnet ist und mindestens eine Befestigungseinheit das Frontplattenelement, den Dichtkörper und das Deckplattenelement in einer Längsrichtung der Dichteinrichtung zusammen hält. Die Vorrichtung umfasst mindestens ein C-Schienen-Element und mindestens ein Wandelement, das quer zu einer Längsöffnung des mindestens einen C-Schienen-Elements angeordnet ist, wobei die Dichteinrichtung in der Längsrichtung in einem Innenraum des C-Schienen-Elements angeordnet ist und mit dem Dichtkörper an das Wandelement angrenzt, und wobei der Dichtkörper in einem verformten Zustand einen Innenraum des C-Schienen-Elements gegenüber dem Wandelement abdichtet.

Die Dichteinrichtung bildet eine Brand- und/oder Druckschutzbarriere in dem Zwischenraum zwischen dem C-Schienen-Element und dem Wandelement. Außerdem gewährleistet die Dichteinrichtung eine zuverlässige, wasserdichte und gasundurchlässige Abdichtung auf rein mechanischem Wege. Die Dichteinrichtung ermöglicht eine leichte Montage und Demontage. Somit kann die Dichteinrichtung bei Bedarf auch öfter montiert und demontiert werden. Aufwendige Schweißarbeiten oder Klebearbeiten mit Schaum oder Vergussmasse werden vermieden. Daher muss auch kein spezieller Zeitpunkt für die Montage oder Demontage eingehalten werden. Es ist keine Unterbrechung der Montage aufgrund von Ablüftzeiten erforderlich, d.h. die Montagezeit wird verkürzt und der Montageprozess wird flexibler. Außerdem ergibt sich ein geringer Wartungsaufwand.

In einer vorteilhaften Ausgestaltung der Erfindung weist der Dichtkörper in einem unverformten Zustand eine prismenförmige Grundform auf, und eine beliebige Anzahl an Kanten des Dichtkörpers ist abgerundet. Die prismenförmige Grundform ermöglicht eine gute Abdichtung zwischen dem Innenraum des C-Schienen-Elements und dem Wandelement.

In einer weiteren Ausgestaltung der Erfindung weist der Dichtkörper in dem unverformten Zustand ein Übermaß gegenüber dem Innenraum des C-Schienen-Elements und dem angrenzenden Wandelement auf. Das Übermaß ermöglicht eine besonders sichere Abdichtung. Gemäß einer vorteilhaften Weiterbildung der Erfindung umfasst die Dichteinrichtung zwei Befestigungseinheiten, die in einer Querrichtung der Dichteinrichtung nebeneinander angeordnet sind. Durch die Anordnung von zwei nebeneinander liegenden Befestigungseinheiten wird eine gleichmäßigere Befestigung des Dichtkörpers zwischen dem Frontplattenelement und dem Deckplattenelement erreicht.

Zweckmäßig weist das C-Schienen-Element mindestens eine Einschuböffnung auf, die mindestens so breit ist wie der Dichtkörper im unverformten Zustand und maximal der Breite des Innenraums des C-Schienen-Elements entspricht, wobei die Länge der Einschuböffnung größer ist als die Länge der Dichteinheit. Die Einschuböffnung ermöglicht ein leichtes Montieren und Demonieren der Dichteinrichtung.

In einer speziellen Weiterbildung der Erfindung überdeckt das Wandelement die Einschuböffnung teilweise. In diesem Fall kann die Dichteinrichtung direkt am Wandelement in der Einschuböffnung montiert werden. Der Einschubweg ist dann kürzer als bei einer Einschuböffnung die von dem Wandelement entfernt ist.

Außerdem kann das Deckplattenelement einen Anschlag umfassen, der an das Wandelement angrenzt. Der Anschlag ermöglicht eine genaue Positionierung und verhindert, dass die Dichteinrichtung an schwer einsehbaren Stellen über die gewünschte Endlage hinausgeschoben wird.

In einer vorteilhaften Weiterbildung der Erfindung sind in Längsrichtung der Dichteinrichtung zwei Dichtkörper angeordnet, und eine Berührungsfläche der Dichtkörper ist zwischen einer ersten Wandfläche und einer zweiten Wandfläche des Wandelements angeordnet. Dadurch wird bei einer Anordnung mit zwei Dichtkörpern eine zuverlässige Abdichtung in einem Bereich zwischen der ersten Wandfläche und der zweiten Wandfläche erreicht.

Insbesondere weist jeder Dichtkörper einen Absatz auf, und die Absätze grenzen in der Längsrichtung beidseitig an das Wandelement an. Die Absätze ermöglichen eine zusätzliche Abdichtung an der ersten Wandfläche und der zweiten Wandfläche. Die Dichtkörper umgreifen also einen Teil des Wandelements.

Gemäß einer besonderen Weiterbildung der Erfindung ist das Frontplattenelement auf einer Seite des Wandelements angeordnet, die Brand- und/oder Druckbelastungen ausgesetzt, und die Dichteinrichtung weist ein Spannmittel für die Befestigungseinheit auf, das an dem Deckplattenelement angeordnet ist. Durch das Spannmittel werden die Befestigungssicherheit und damit die Betriebssicherheit erhöht.

Vorzugsweise ist die Befestigungseinheit gegen ein Verdrehen und Losdrehen gesichert, und zwischen der Befestigungseinheit und dem Frontplattenelement ist ein Dichtmittel angeordnet. Die Sicherung gegen Verdrehen und Losdrehen der Befestigungseinheit erhöht die Betriebssicherheit der Dichteinrichtung. Das Dichtmittel bietet eine zusätzliche Sicherheit gegen Brand- und/oder Druckbelastungen sowie einen Durchtritt von Wasser und/oder Gas.

Die Befestigungseinheit kann mit dem Frontplattenelement stoffschlüssig verbunden sein. Hierdurch wird die Stabilität der Dichteinrichtung erhöht.

Insbesondere kann das Frontplattenelement in den Dichtkörper eingeformt sein. Hierdurch wird die Anzahl der Auflageflächen der Befestigungseinheit reduziert und somit eine Zuverlässigkeit der Abdichtung erhöht.

Beansprucht wird außerdem ein Schienenfahrzeug mit der Vorrichtung.

Weiterhin besteht die Lösung der Aufgabe in einem Verfahren zum Montieren einer Dichteinrichtung in der Vorrichtung mit den Schritten:
- Einsetzen der zumindest teilweise zusammen gesetzten Dichteinrichtung in das mindestens eine C-Schienen-Element,
- Verschieben der zumindest teilweise zusammen gesetzten Dichteinrichtung bis der mindestens eine Dichtkörper symmetrisch zum Wandelement angeordnet ist,
- Verformen des mindestens einen Dichtkörpers durch Aufbringen einer Spannung mit Hilfe des Frontplattenelements, des Deckplattenelements, der Befestigungseinheit und des Spannmittels.

Das Verfahren ermöglicht ein einfaches Einsetzen der Dichteinrichtung in den Zwischenraum zwischen dem C-Schienen-Element und dem Wandelement. Weiterhin wird durch das Verformen des Dichtkörpers eine zuverlässige Abdichtung gegen Brand- und/oder Druckbelastungen sowie gegen einen Wasser und/oder Gasdurchtritt gewährleistet.

Im Folgenden werden sechs Ausführungsbeispiele der Erfindung anhand von elf Figuren näher erläutert. Es zeigen:
- Fig. 1: eine schematische Schnittansicht der erfindungsgemäßen Vorrichtung mit einer Dichteinrichtung gemäß einem ersten Ausführungsbeispiel,
- Fig. 2: eine schematische Frontansicht der erfindungsgemäßen Vorrichtung mit einer Dichteinrichtung gemäß dem ersten Ausführungsbeispiel,
- Fig. 3: eine schematische Rückansicht der erfindungsgemäßen Vorrichtung mit einer Dichteinrichtung gemäß dem ersten Ausführungsbeispiel,
- Fig. 4: eine schematische Draufsicht auf eine Einschuböffnung der erfindungsgemäßen Vorrichtung,
- Fig. 5: eine schematische Seitenansicht der Dichteinrichtung gemäß dem ersten Ausführungsbeispiel,
- Fig. 6: eine schematische Rückansicht der Dichteinrichtung gemäß dem ersten Ausführungsbeispiel,
- Fig. 7: eine schematische Schnittansicht einer erfindungsgemäßen Vorrichtung gemäß einem zweiten Ausführungsbeispiel,
- Fig. 8: eine schematische Schnittansicht einer erfindungsgemäßen Vorrichtung gemäß einem dritten Ausführungsbeispiel,
- Fig. 9: eine schematische Schnittansicht einer erfindungsgemäßen Vorrichtung gemäß einem vierten Ausführungsbeispiel,
- Fig. 10: eine schematische Schnittansicht einer erfindungsgemäßen Vorrichtung gemäß einem fünften Ausführungsbeispiel und
- Fig. 11: eine schematische Schnittansicht einer erfindungsgemäßen Vorrichtung gemäß einem sechsten Ausführungsbeispiel.

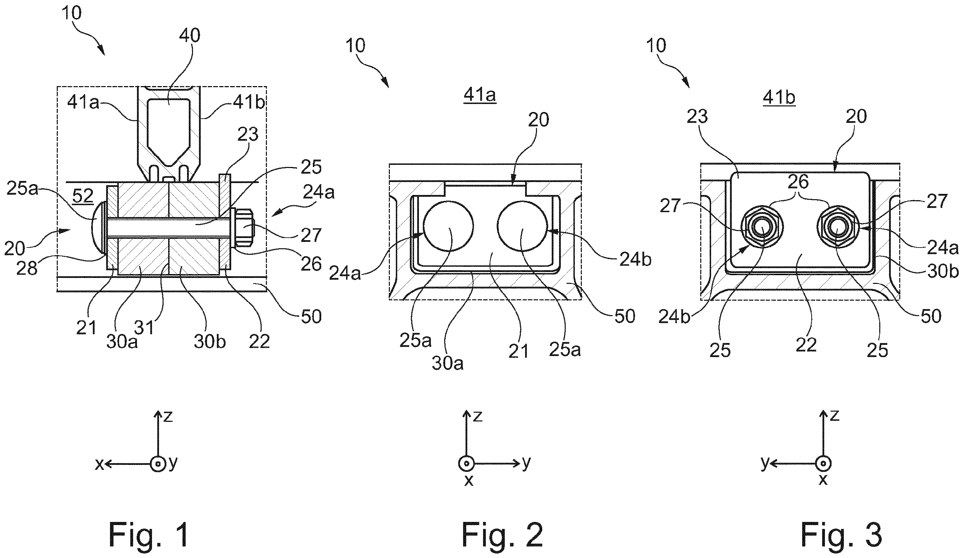

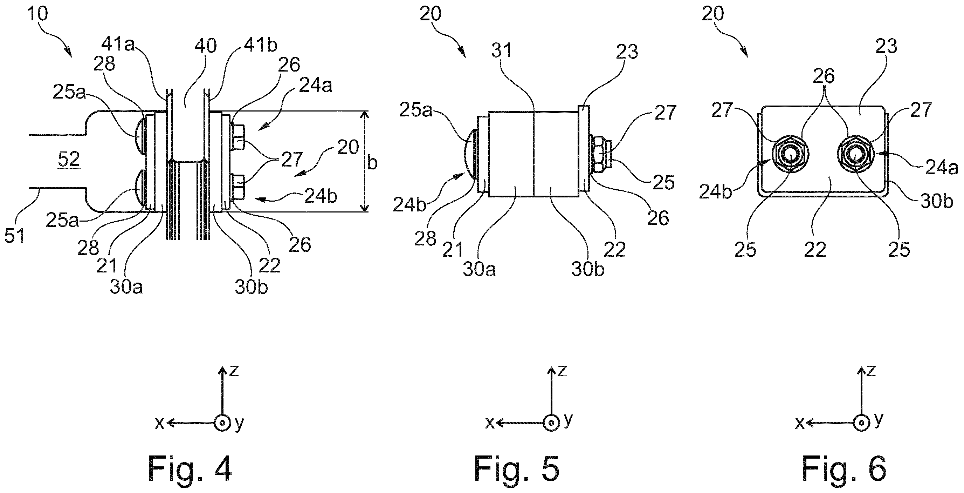

Die Figuren 1 bis 4 und 7 bis 11 zeigen eine erfindungsgemäße Vorrichtung 10 mit verschiedenen Ausführungsformen einer Dichteinrichtung 20. Die Vorrichtung 10 ist Teil eines hier nicht weiter dargestellten Schienenfahrzeugs. Das Schienenfahrzeug und die Dichteinrichtung 20 weisen eine Längsrichtung x, eine Querrichtung y und eine senkrechte Richtung z auf. In den Figuren 5 und 6 ist ein erstes Ausführungsbeispiel der Dichteinrichtung 20 isoliert dargestellt. Die Vorrichtung 10 umfasst außer der Dichteinrichtung 20 ein Wandelement 40 und ein C-Schienen-Element 50.

Das Wandelement 40 weist eine erste Wandfläche 41a und eine zweite Wandfläche 41b auf, die einander gegenüberliegen und in Richtung der Dichteinrichtung 20 abgeschrägt sind.

Das C-Schienen-Element 50 verläuft senkrecht zum Wandelement 40 und weist eine Längsöffnung 51 (Fig. 4), einen Innenraum 52 (Fig. 1, 4 und 7 bis 11) und eine Einschuböffnung 53 (Fig. 4) auf. Im Innenraum 52 des C-Schienen-Elements 50 befindet sich die Dichteinrichtung 20. Das C-Schienen-Element 50 ist ein im Schienenfahrzeugbau geläufiges langgestrecktes Profilelement, das einen rechteckigen Grundquerschnitt aufweist, der an einer Seite in Längsrichtung offen ist und damit die Längsöffnung 51 bildet. Die Einschuböffnung 53 ist breiter als die Längsöffnung 51 und verläuft unterhalb des Wandelements 40. Die Einschuböffnung 53 kann auch an einer anderen Stelle des C-Schienen-Elements 50 angeordnet sein. Die Breite b der Einschuböffnung 53 entspricht der Breite der Dichteinrichtung 20 vor einem Einpressen. Die Einschuböffnung 53 weist eine Länge auf, die ein Einsetzen von Teilen der Dichteinrichtung 20 auf beiden Seiten des Wandelements 40 ermöglicht.

Gemäß den Figuren 1 bis 11 umfasst die Dichteinrichtung jeweils ein Frontplattenelement 21, ein Deckplattenelement 22, eine erste Befestigungseinheit 24a, eine zweite Befestigungseinheit 24b, einen ersten Dichtkörper 30a und einen zweiten Dichtkörper 30b.

Der erste Dichtkörper 30a und der zweite Dichtkörper 30b sind quaderförmig ausgeführt und grenzen an einer Berührungsfläche 31 an einander an. Das Frontplattenelement 21 grenzt gegenüber von der Berührungsfläche 31 an den ersten Dichtkörper 30a an. Das Deckplattenelement grenzt gegenüber von der Berührungsfläche 31 an den zweiten Dichtkörper 30b an. Die Berührungsfläche 31 befindet sich zwischen der ersten Wandfläche 41a und der zweiten Wandfläche 41b.

In den Fig. 1 bis 6 ist eine erste Ausführungsform der Dichteinrichtung 20 dargestellt. Die erste Befestigungseinheit 24a und die zweite Befestigungseinheit 24b umfassen jeweils einen Schraubenschaft 25 mit einem Schraubenkopf 25a, ein Dichtmittel 28, eine Mutter 27 als Spannmittel und eine Unterlegscheibe 26. Die Schraubenschäfte 25 durchdringen den ersten Dichtkörper 30a, den zweiten Dichtkörper 30b, das Frontplattenelement 21 und das Deckplattenelement 22 vollständig. Der Schraubenkopf 25a befindet sich auf dem Fronplattenelement 21 und bildet einen Halbrundkopf mit einem hier nicht dargestellten Vierkantansatz. Der Vierkantansatz ragt in das Frontplattenelement 21 hinein. Zwischen dem Frontplattenelement 21 und dem Schraubenkopf 25a befindet sich das Dichtmittel 28, das aus EPDM gebildet sein kann. Die Mutter 27 befindet sich auf dem Deckplattenelement 22. Zwischen dem Deckplattenelement 22 und der Mutter 27 befindet sich die Unterlegscheibe 26 als Sicherungskeil.

Das Deckplattenelement 22 weist einen Anschlag 23 auf, der in der senkrechten Richtung z über den zweiten Dichtkörper 30b hinaus ragt und an die zweite Wandfläche 41b angrenzt. Die Abmessungen des Anschlags 23 sind entsprechend der gewünschten Mindestüberdeckung an der zweiten Wandfläche 41b gewählt. Die Abmessungen des Frontplattenelements 21 und des Deckplattenelements 22 in der Querrichtung y und der senkrechten Richtung z sind, abgesehen vom Anschlag 23, kleiner als die angrenzenden Flächen des ersten Dichtkörpers 30a und des zweiten Dichtkörpers 30b.

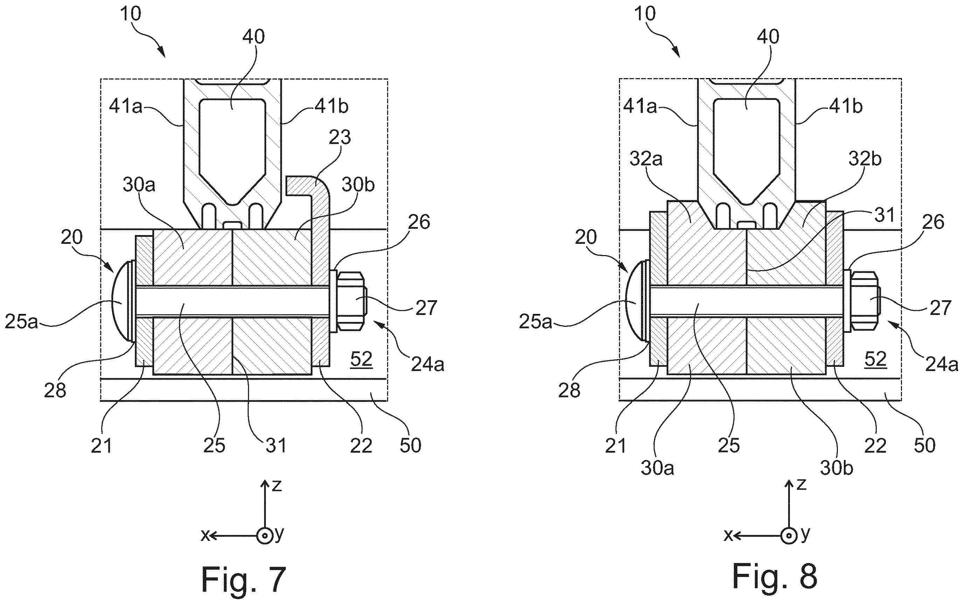

In den Fig. 7 bis 11 sind weitere Ausführungsformen dargestellt, die von der ersten Ausführungsform der Dichteinrichtung 20 abgeleitet sind und zum Teil Gemeinsamkeiten mit der ersten Ausführungsform aufweisen. In den verschiedenen Ausführungsformen weisen gleiche bzw. ähnliche Bauteile gleiche Bezugszeichen auf.

In der Fig. 7 ist eine zweite Ausführungsform der Dichteinrichtung 20 dargestellt. Das Deckplattenelement 22 weist einen Anschlag 23 auf, der an die zweite Wandfläche 41b angrenzt.

Das Deckplattenelement 22 mit dem Absatz 23 ist hier als abgekantetes Blech in L-Form dargestellt.

In der Fig. 8 ist eine dritte Ausführungsform der Dichteinrichtung 20 dargestellt. Der erste Dichtkörper 30a weist einen ersten Absatz 32a auf. Der zweite Dichtkörper 30b weist einen zweiten Absatz 32b auf. Der erste Absatz 32a ist formschlüssig an die abgeschrägte erste Wandfläche 41a angepasst. Der zweite Absatz 32b ist formschlüssig an die abgeschrägte zweite Wandfläche 41b angepasst.

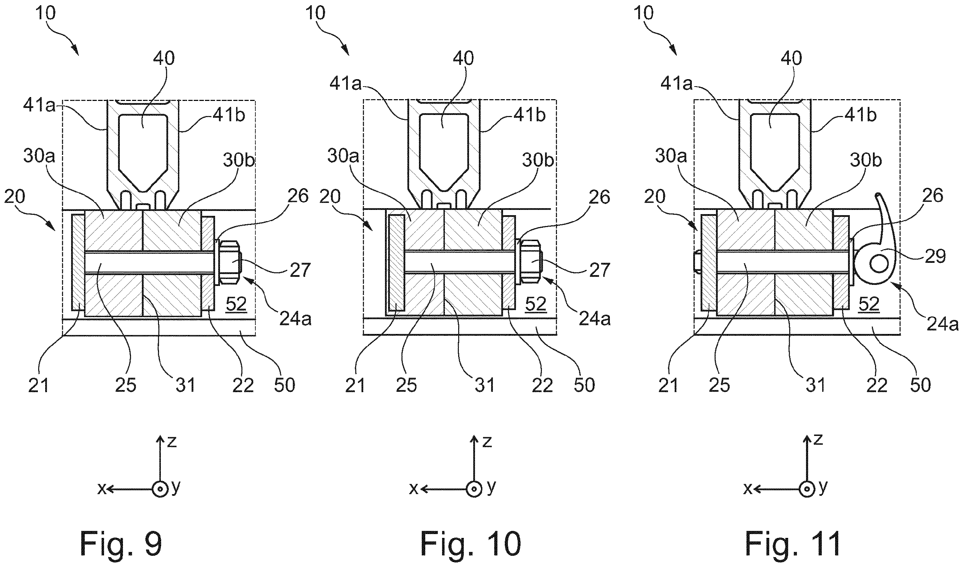

In der Fig. 9 ist eine vierte Ausführungsform der Dichteinrichtung 20 dargestellt. Die Schraubenschäfte 25 der ersten Befestigungseinheit 24a und der zweiten Befestigungseinheit 24b sind jeweils stoffschlüssig mit dem Frontplattenelement 21 verbunden, z.B. durch Schweißen.

In der Fig. 10 ist eine fünfte Ausführungsform der Dichteinrichtung 20 dargestellt. Die Schraubenschäfte 25 der ersten Befestigungseinheit 24a und der zweiten Befestigungseinheit 24b sind jeweils stoffschlüssig mit dem Frontplattenelement 21 verbunden, z.B. durch Schweißen, wobei das Frontplattenelement 21 in den ersten Dichtkörper 30a eingeformt ist.

In der Fig. 11 ist eine sechste Ausführungsform der Dichteinrichtung 20 dargestellt. Die Schraubenschäfte 25 der ersten Befestigungseinheit 24a und der zweiten Befestigungseinheit 24b sind in jeweils ein nicht dargestelltes Gewinde des Frontplattenelements 21 eingeschraubt. Auf der Seite des Deckelements 22 ist ein Spannmittel in Form eines exzentrisch gelagerten Spannhebels 29 an dem Schraubenschaft 25 angebracht.

In Bezug auf die Figuren 1 bis 4 und 7 bis 11 kann entlang des Wandelements 40 auch mehr als ein C-Schienen-Element 50 mit jeweils einer Dichteinrichtung 20 angeordnet sein. Die Anzahl der C-Schienen-Elemente 50 und der zugehörigen Dichteinrichtungen 20 sollte möglichst gering sein, da Trennfugen unerwünschtes Setzverhalten hervorrufen können und das Risiko von Leckagen erhöhen.

Die Dichteinrichtung 20 gemäß den Fig. 1 bis 11 kann an Stelle der rechteckigen Grundform auch andere Grundformen aufweisen, die an andere Einbaugeometrien angepasst sind.

Das Material und die Abmessungen des ersten Dichtkörpers 30a und des zweiten Dichtkörpers 30b werden entsprechend den Einsatzanforderungen, d.h. Brand- und/oder Druckschutz, gewählt. Bei der Verwendung von Elastomeren sind auch die Fertigungsmöglichkeiten zu berücksichtigen.

Die Dichteinrichtung 20 dient innerhalb der Vorrichtung 10 zu einer Brandschutzabdichtung, z.B. zwischen einem Passagierbereich und einem Maschinenraum, und/oder zu einer Druckschutzabdichtung, z.B. zwischen einem Passagierbereich und einem Außenbereich.

Die Dichteinrichtung 20 wird an einer Einschuböffnung 53 in den Innenraum 52 des C-Schienen-Elements eingesetzt. Wenn die Einschuböffnung 53 beidseitig des Wandelements 40 angeordnet ist und mindestens zwei Dichtköper 30a, 30b vorhanden sind, werden auf beiden Seiten des Wandelements 40 Teile der Dichteinrichtung 20 eingesetzt und dann zusammengefügt. Wenn die Einschuböffnung 53 nur auf einer Seite des Wandelements 40 angeordnet ist, wird die vormontierte Dichteinrichtung 20 in die Einschuböffnung 53eingesetzt und bis zum Wandelelement 40 verschoben.

Die Dichteinrichtung 20 wird so ausgerichtet, dass die Mutter 27 auf der Seite des Wandelements 40 angeordnet ist, die von der Brand- und/oder Druckbelastung abgewandt ist, d.h. im Bereich neben der zweiten Wandfläche 41b. Der Schraubenkopf 25 befindet sich auf der Seite des Wandelements 40, auf der die Brand- und/oder Druckbeaufschlagung stattfindet. D.h. neben der ersten Wandfläche 41a. Dadurch können bei besonders hohen Anforderungen an Fahrgastkomfort (Druckschutz) und/oder Brandschutz eventuelle Leckagestellen und/oder Wärmebrücken vermieden werden.

Der erste Dichtkörper 30a und der zweite Dichtkörper 30b weisen ein Übermaß gegenüber dem Innenraum 52 des C-Schienen-Elements 50 und dem angrenzenden Wandelelement 40 auf. Dies führt beim Einsetzen der Dichteinrichtung 20 in den Innenraum 52 des C-Schienen-Elements 50 zu einer Vorspannung des ersten Dichtkörpers 30a und des zweiten Dichtkörpers 30b und ermöglicht eine sichere Abdichtung. Um den Kraftaufwand bei der Montage zu reduzieren, werden der erste Dichtkörper 30a und der zweite Dichtkörper 30b an den Kontaktflächen zum C-Schienen-Element 50 und zum Wandelement 40 mit einem Schmiermittel behandelt

Der erste Dichtkörper 30a und der zweite Dichtkörper 30b der Dichteinrichtung 20 ermöglichen eine Abdichtung zwischen dem C-Schienen-Element 50 und dem Wandelement 40. Die Abdichtung erfolgt durch eine elastische Verformung des ersten Dichtkörpers 30a und des zweiten Dichtkörpers 30b infolge eines Aufbringens einer Vorspannkraft beim Anziehen der Muttern 27 der ersten Befestigungseinheit 24a und der zweiten Befestigungseinheit 24b bzw. durch Spannen des Spannhebels 29 (Fig. 11).

Wenn der erste Dichtkörper 30a und der zweite Dichtkörper 30b aus einem Elastomer ohne metallischen Kern gebildet sind, kann bei einem Verspannen ein Undefinierter Verspannungszustand auftreten. Deshalb wird die Mutter 27 mit einem Klemmkeil als Unterlegscheibe 26 gegen Losdrehen gesichert. Möglich wären auch eine zusätzliche Schraubensicherung bzw. eine mechanische Verdrehsicherung in Form einer Federspange oder eines Splintes.

Das Frontplattenelement 21 dient als Auflage für den Schraubenkopf 25a (Fig. 1 bis 8) bzw. als Aufnahme für den Schraubenschaft 25 (Fig. 9 bis 11). Das Deckplattenelement 22 dient als Auflage für die Mutter 27. Das Frontplattenelement 21 und das Deckplattenelement 22 verteilen Spannkräfte, die durch die erste Befestigungseinheit 24a und die zweite Befestigungseinheit 24b erzeugt werden, auf den ersten Dichtkörper 30a und den zweiten Dichtkörper 30b. Gleichzeitig verhindern sie eine Beschädigung des ersten Dichtkörpers 30a und des zweiten Dichtkörpers 30b und ein Durchrutschen des Schraubenkopfes 25a (Fig. 1 bis 8) und der Mutter 27. Der Anschlag 23 des Deckplattenelements 22 (Fig. 1, 3, 5 bis 7) verhindert, dass die Dichteinrichtung 20 an schwer einsehbaren Stellen über die gewünschte Lage am Wandelement 40 hinaus verschoben wird.

Über das Frontplattenelement 21 und das Deckplattenelement 22 werden die von der ersten Befestigungseinheit 24a und der zweiten Befestigungseinheit 24 b aufgebrachten Kräfte gleichmäßig auf den ersten Dichtkörper 30a und den zweiten Dichtkörper 30b verteilt.

Wenn das Frontplattenelement 21 in den ersten Dichtkörper 30a eingeformt ist (Fig. 10), wird dieses vor direkter Flammeneinwirkung geschützt.

Der Unterschied in den Abmessungen zwischen dem Frontplattenelement 21 und dem ersten Dichtkörper 30a sowie zwischen dem Deckplattenelement 22, abgesehen vom Anschlag 23, und dem zweiten Dichtkörper 30b ermöglicht ein Ausweichen des ersten Dichtkörpers 30a und des zweiten Dichtkörpers 30b bei der Montage und somit eine optimale Konturanpassung und eine damit verbundene Dichtigkeit. Verdrehsicherungen in Form von Vierkantansätzen an den Schraubenköpfen 25a ermöglichen einen Einbau der Dichteinrichtung 20 durch nur eine Person. Die Dichtmittel unter den Schraubenköpfen 25a, die z.B. Kunststoffscheiben sein können, dichtet die Schraubenköpfe 25a gegenüber dem Frontplattenelement 21 ab und verhindern so eine Leckage vom Schraubenkopf 25a hin zum Schraubenschaft 25.

Wenn die Dichteinrichtung 20 einen Spannhebel 29 aufweist (Fig. 11), kann diese ohne zusätzliches Montagewerkzeug montiert werden. Der Spannhebel 29 ermöglicht eine Beaufschlagung des ersten Dichtkörper 30a und des zweiten Dichtkörper 30b mit einer Kraft. Über die Exzentrizität des Spannhebels 29 lässt sich der gewünschte Hub des Deckscheibenelements 22 und damit eine auf den ersten Dichtkörper 30a und den zweiten Dichtkörper 30b wirkende Spannkraft einstellen.

Um die Dichteinrichtung 20 in Zukunft flexibler zu gestalten, wäre es denkbar, für den ersten Dichtkörper 30a und den zweiten Dichtkörper 30b einen anderen Werkstoff als ein Elastomer zu wählen. Elastomere müssen entsprechend der benötigten Geometrie eines Bauteils vorgefertigt werden. Anstelle eines reinen Elastomers könnte für den ersten Dichtkörper 30a und den zweiten Dichtkörper 30b jeweils ein hochflexibler Elastomerkörper verwendet werden, der mit einem Gas-, Flüssigkeits- oder Gel-Depot gefüllt ist, ähnlich wie bei einem Hydrolager. Im unbelasteten Zustand könnte ein derartiger gefüllter Elastomerkörper dann in die Einschuböffnung 53 eingebracht und anschließend mittels einer geeigneten Spannvorrichtung mit Druck beaufschlagt werden. Die dadurch erzielte Verformung des Elastomerkörpers würde den Innenraum 52 des C-Schienen-Elements 50 gegenüber dem Wandelement 40 verschließen. Die möglichen Verformungsgrade wären deutlich höher als bei einem reinen Elastomer.

Eine weitere Möglichkeit wäre eine Verwendung eines ersten Dichtkörpers 30a und eines zweiten Dichtkörpers 30b mit Formgedächtnis. Diese noch relativ neue Technologie beschäftigt sich mit Werkstoffen, die unter der Einwirkung von Druck oder Temperatur ihre Form verändern können. Mit Hilfe eines Werkstoffes mit Formgedächtnis könnten der erste Dichtkörper 30a und der zweite Dichtkörper 30b einfach für eine Montage verformt werden und anschließend beispielweise durch Anlegen einer elektrischen Spannung innerhalb des Innenraums 52 des C-Schienen-Elements 50 und einer Begrenzung durch das Wandelement 40 in seine ursprüngliche Form zurück gebracht werden oder umgekehrt. Der Prozess wäre wiederholbar, das heißt eine Montage und Demontage wären ebenso zerstörungsfrei möglich.

### Bezugszeichenliste

- 10: Vorrichtung
- 20: Dichteinrichtung
- 21: Frontplattenelement
- 22: Deckplattenelement
- 23: Anschlag
- 24a: Erste Befestigungseinheit
- 24b: Zweite Befestigungseinheit
- 25: Schraubenschaft
- 25a: Schraubenkopf
- 26: Unterlegscheibe
- 27: Mutter
- 28: Dichtmittel
- 29: Spannhebel
- 30a: Erster Dichtkörper
- 30b: Zweiter Dichtkörper
- 31: Berührungsfläche
- 32a: Erster Absatz
- 32b: Zweiter Absatz
- 40: Wandelement
- 41a: Erste Wandfläche
- 41b: Zweite Wandfläche
- 50: C-Schienen-Element
- 51: Längsöffnung
- 52: Innenraum
- 53: Einschuböffnung
- b: Breite
- X: Längsrichtung
- Y: Querrichtung
- Z: Senkrechte Richtung

## Patentansprüche

1. Vorrichtung (10) mit einer Dichteinrichtung (20), bei der mindestens ein verformbarer Dichtkörper (30a, 30b) zwischen einem Frontplattenelement (21) und einem Deckplattenelement (22) angeordnet ist und mindestens eine Befestigungseinheit (24a, 24b) das Frontplattenelement (21), den Dichtkörper (30a, 30b) und das Deckplattenelement (22) in einer Längsrichtung (x) der Dichteinrichtung (20) zusammen hält, **dadurch gekennzeichnet, dass** die Vorrichtung (10) mindestens ein C-Schienen-Element (50) und mindestens ein Wandelement (40) umfasst, das quer zu einer Längsöffnung (51) des mindestens einen C-Schienen-Elements (50) angeordnet ist, wobei die Dichteinrichtung (20) in der Längsrichtung (x) in einem Innenraum (52) des C-Schienen-Elements (50) angeordnet ist und mit dem Dichtkörper (30a, 30b) an das Wandelement (40) angrenzt, und wobei der Dichtkörper (30a, 30b) in einem verformten Zustand einen Innenraum (52) des C-Schienen-Elements (50) gegenüber dem Wandelement (40) abdichtet.

2. Vorrichtung (10) nach Anspruch 1, **dadurch gekennzeichnet, dass** der Dichtkörper (30a, 30b) in einem unverformten Zustand eine prismenförmige Grundform aufweist und eine beliebige Anzahl an Kanten des Dichtkörpers (30a, 30b) abgerundet ist.

3. Vorrichtung (10) nach Anspruch 2, **dadurch gekennzeichnet, dass** der Dichtkörper (30a, 30b) in dem unverformten Zustand ein Übermaß gegenüber dem Innenraum (52) des C-Schienen-Elements (50) und dem angrenzenden Wandelement (40) aufweist.

4. Vorrichtung (10) nach einem der Ansprüche 1 bis 3, **dadurch gekennzeichnet, dass** die Dichteinrichtung (20) zwei Befestigungseinheiten (24a, 24b) umfasst, die in einer Querrichtung (y) der Dichteinrichtung (20) nebeneinander angeordnet sind.

5. Vorrichtung (10) nach einem der Ansprüche 1 bis 4, **dadurch gekennzeichnet, dass** das C-Schienen-Element (50) mindestens eine Einschuböffnung (53) aufweist, die mindestens so breit ist wie der Dichtkörper (30a, 30b) im unverformten Zustand und maximal der Breite des Innenraums (52) des C-Schienen-Elements (50) entspricht, wobei die Länge der Einschuböffnung (53) größer ist als die Länge der Dichteinheit (20).

6. Vorrichtung (10) nach Anspruch 5, **dadurch gekennzeichnet, dass** das Wandelement (40) die Einschuböffnung (53) teilweise überdeckt.

7. Vorrichtung (10) nach einem der Ansprüche 1 bis 6, **dadurch gekennzeichnet, dass** das Deckplattenelement (22) einen Anschlag (23) umfasst, der an das Wandelement (40) angrenzt.

8. Vorrichtung (10) nach einem der Ansprüche 1 bis 7, **dadurch gekennzeichnet, dass** in Längsrichtung (x) der Dichteinrichtung (20) zwei Dichtkörper (30a, 30b) angeordnet sind und eine Berührungsfläche (31) der Dichtkörper (30a, 30b) zwischen einer ersten Wandfläche (41a) und einer zweiten Wandfläche (41b) des Wandelements (40) angeordnet ist.

9. Vorrichtung (10) nach Anspruch 8, **dadurch gekennzeichnet, dass** jeder Dichtkörper (30a, 30b) einen Absatz (32a, 32b) aufweist und die Absätze (32a, 32b) in der Längsrichtung (x) beidseitig an das Wandelement (40) angrenzen.

10. Vorrichtung (10) nach einem der Ansprüche 1 bis 9, **dadurch gekennzeichnet, dass** das Frontplattenelement (21) auf einer Seite des Wandelements (40) angeordnet ist, die Brand- und/oder Druckbelastungen ausgesetzt ist, und die Dichteinrichtung (20) ein Spannmittel (27, 29) für die Befestigungseinheit (24a, 24b) aufweist, das an dem Deckplattenelement (22) angeordnet ist.

11. Vorrichtung (10) nach einem der Ansprüche 1 bis 10, **dadurch gekennzeichnet, dass** die Befestigungseinheit (24a, 24b) gegen ein Verdrehen und Losdrehen gesichert ist und zwischen der Befestigungseinheit (24a, 24b) und dem Frontplattenelement (21) ein Dichtmittel (28) angeordnet ist.

12. Vorrichtung (10) nach einem der Ansprüche 1 bis 10, **dadurch gekennzeichnet, dass** die Befestigungseinheit (24a, 24b) mit dem Frontplattenelement (21) stoffschlüssig verbunden ist

13. Vorrichtung (10) nach Anspruch 12, **dadurch gekennzeichnet, dass** das Frontplattenelement (21) in den Dichtkörper (30a) eingeformt ist.

14. Schienenfahrzeug mit einer Vorrichtung (10) nach einem der vorhergehenden Ansprüche.

15. Verfahren zum Montieren einer Dichteinrichtung (20) für eine Vorrichtung (10) nach einem der Ansprüche 1 bis 13, mit den Schritten:
- Einsetzen der zumindest teilweise zusammen gesetzten Dichteinrichtung (20) in das mindestens eine C-Schienen-Element (50),
- Verschieben der zumindest teilweise zusammen gesetzten Dichteinrichtung (20) bis der mindestens eine Dichtkörper (30a, 30b) symmetrisch zum Wandelement (40) angeordnet ist,
- Verformen des mindestens einen Dichtkörpers (30a, 30b) durch Aufbringen einer Spannung mit Hilfe des Frontplattenelements (21), des Deckplattenelements (22), der Befestigungseinheit (24a, 24b) und des Spannmittels (27, 29).

## Claims

1. A device (10) having a sealing device (20), in which at least one deformable sealing body (30a, 30b) is arranged between a front panel element (21) and a cover panel element (22) and at least one fastening unit (24a, 24b) holds the front panel element (21), the sealing body (30a, 30b) and the cover panel element (22) together in a longitudinal direction (x) of the sealing device (20), **characterized in that** the sealing body (30a, 30b) and the cover panel element (22) are arranged in a longitudinal direction (x) of the sealing device (20) and **in that** the sealing body (30a, 30b) and the cover panel element (22) are arranged in a longitudinal direction (x) of the sealing device (20), in **characterized in that** the device (10) comprises at least one C-rail element (50) and at least one wall element (40) which is arranged crosswise to a longitudinal opening (51) of the at least one C-rail element (50), the sealing device (20) being arranged in the longitudinal direction (x) in an interior space (52) of the C-rail element (50) and being bordered with the sealing body (30a, 30b) to the wall element (40), and the sealing body (30a, 30b) in a deformed state sealing an interior space (52) of the C-rail element (50) with respect to the wall element (40).

2. The device (10) according to claim 1, **characterized in that** the sealing body (30a, 30b) has a prism-shaped basic shape in an undeformed state, wherein any number of edges of the sealing body (30a, 30b) are rounded.

3. The device (10) according to claim 2, **characterized in that** the sealing body (30a, 30b) in the undeformed state has an oversize with respect to the interior (52) of the C-rail element (50) and the adjacent wall element (40).

4. The device (10) according to any of claims 1 to 3, **characterized in that** the sealing device (20) comprises two fastening devices (24a, 24b) arranged side by side in a cross direction (y) of the sealing arrangement (20).

5. The device according to one of claims 1 to 4, **characterized in that** the C-rail element (50) has at least one insertion opening (53) which is at least as wide as the sealing body (30a, 30b) in the undeformed state and corresponds at a maximum to the width of the interior (52) of the C-rail element (50), wherein the length of the insertion opening (53) is larger than the length of the sealing unit (20).

6. The device according to claim 5, **characterized in that** the wall element (40) partially covers the insertion opening (53).

7. The device (10) according to any of claims 1 to 6, **characterized in that** the cover plate member (22) comprises a abutment (23) adjacent to the wall member (40).

8. The device (10) according to one of claims 1 to 7, **characterized in that** two sealing bodies (30a, 30b) are arranged in the longitudinal direction (x) of the sealing arrangement (20) and a contact surface (31) of the sealing bodies (30a, 30b) is arranged between a first wall surface (41a) and a second wall surface (41b) of the wall element (40).

9. The device (10) according to claim 8, **characterized in that** each sealing body (30a, 30b) has a shoulder (32a, 32b) and the shoulder (32a, 32b) adjoins the wall element (40) on both sides in the longitudinal direction (x).

10. The device (10) according to any of claims 1 to 9, **characterized in that** the front panel element (21) is arranged on one side of the wall element (40) which is exposed to fire and/or pressure loads, and the sealing device (20) comprises a tensioning means (27, 29) for the fastening unit (24a, 24b) which is arranged on the cover panel element (22).

11. The device (10) according to one of claims 1 to 10, **characterized in that** the fastening unit (24a, 24b) is secured against rotation and loosening, with a sealing means (28) being arranged between the fastening unit (24a, 24b) and the front panel element (21).

12. The device (10) according to one of claims 1 to 10, **characterized in that** the fastening unit (24a, 24b) is connected to the front panel element (21) by material bonding.

13. The device (10) according to claim 12, **characterized in that** the front panel element (21) is moulded into the sealing body (30a).

14. A rail vehicle with a device (10) according to one of the preceding claims.

15. A method of assembling a sealing arrangement (20) for a device (10) according to any of claims 1 to 13, comprising the steps:
- inserting said at least partially assembled sealing arrangement (20) into said at least one C-rail member (50),
- displacing the at least partially assembled sealing arrangement (20) until the at least one sealing body (30a, 30b) is arranged symmetrically with respect to the wall element (40),
- deforming the at least one sealing body (30a, 30b) by applying a tension with the aid of the front panel element (21), the cover panel element (22), the fastening unit (24a, 24b) and the tensioning means (27, 29).

## Revendications

1. Dispositif (10) doté d'un dispositif d'étanchéité (20) dans lequel au moins un corps d'étanchéité déformable (30a, 30b) est disposé entre une plaque frontale (21) et une plaque de recouvrement (22) et au moins un élément de fixation (24a, 24b) maintient la cohésion de la plaque frontale, du corps d'étanchéité et de la plaque de recouvrement dans un sens longitudinal (x) du dispositif d'étanchéité (20), **caractérisé en ce que** le dispositif (10) comprend au moins un rail en C et au moins une paroi (40) disposée transversalement à une ouverture longitudinale (51) de l'au moins un rail en C (50), le dispositif d'étanchéité (20) état disposé dans le sens longitudinal (x) dans un espace intérieur (52) du rail en C (50) et adjacent à la paroi (40) avec le corps d'étanchéité (30a, 30b) et le corps d'étanchéité (30a, 30b), lorsqu'il n'est pas déformé, fermant hermétiquement un espace intérieur (52) du rail en C (50) par rapport à l'élément de paroi.

2. Dispositif (10) selon la revendication 1, **caractérisé en ce que** l'élément d'étanchéité (30a, 30b), lorsqu'il n'est pas déformé, a une forme de base prismatique et un nombre quelconque d'arêtes du corps d'étanchéité (30a, 30b) sont arrondies.

3. Dispositif (10) selon la revendication 2, **caractérisé en ce que** l'élément d'étanchéité (30a, 30b), lorsqu'il n'est pas déformé, présente une surépaisseur par rapport à l'espace intérieur (52) du rail en C (50) et à la paroi (40) adjacente.

4. Dispositif (10) selon l'une quelconque des revendications 1 à 3, **caractérisé en ce que** le dispositif d'étanchéité (20) comporte deux éléments de fixation (24a, 24b) disposés côte à côte dans un sens transversal (y) du dispositif d'étanchéité (20).

5. Dispositif (10) selon l'une quelconque des revendications 1 à 4, **caractérisé en ce que** le rail en C (50) présente au moins une ouverture d'insertion (53) au moins aussi large que le corps d'étanchéité (30a, 30b) lorsqu'il n'est pas déformé et correspond au maximum à la largeur de l'espace intérieur (52) du rail en C (50), la longueur de l'ouverture d'insertion (53) étant plus grande que la longueur de l'élément d'étanchéité (20).

6. Dispositif (10) selon la revendication 5, **caractérisé en ce que** la paroi (40) recouvre en partie l'ouverture d'insertion (53).

7. Dispositif (10) selon l'une quelconque des revendications 1 à 6, **caractérisé en ce que** la plaque de recouvrement (22) comporte une butée (23) adjacente à la paroi (40).

8. Dispositif (10) selon l'une quelconque des revendications 1 à 7, **caractérisé en ce que** deux corps d'étanchéité (30a, 30b) sont disposés dans le sens longitudinal (X) du dispositif d'étanchéité (20) et une face de contact (31) du corps d'étanchéité (30a, 30b) est disposée entre une première zone de paroi (41a) et une deuxième zone de paroi (41b) de la paroi (40).

9. Dispositif (10) selon la revendication 8, **caractérisé en ce que** chaque corps d'étanchéité (30a, 30b) présente un épaulement (32a, 32b) et les épaulements (32a, 32b) sont adjacents dans le sens longitudinal (x) des deux côtés à la paroi (40).

10. Dispositif (10) selon l'une quelconque des revendications 1 à 9, **caractérisé en ce que** la plaque frontale (21) est disposée sur un côté de la paroi (40) exposé à des charges d'incendie et/ou de pression, et le dispositif d'étanchéité (20) présente un système de serrage (27, 29) destiné à l'élément de fixation (24a, 24b), disposé sur la plaque de recouvrement (22).

11. Dispositif (10) selon l'une quelconque des revendications 1 à 10, **caractérisé en ce que** l'élément de fixation (24a, 24b) est protégé contre toute déformation et dévissage et un moyen d'étanchéité (28) est disposé entre l'élément de fixation (24a, 24b) et la plaque frontale (21).

12. Dispositif (10) selon l'une quelconque des revendications 1 à 10, **caractérisé en ce que** l'élément de fixation (24a, 24b) est relié à la plaque frontale (21) par coopération de matière.

13. Dispositif (10) selon la revendication 12, **caractérisé en ce que** la plaque frontale (21) est moulée dans le corps d'étanchéité (30a).

14. Véhicule ferroviaire équipé d'un dispositif (10) selon l'une quelconque des revendications précédentes.

15. Procédé de montage d'un dispositif d'étanchéité (20) pour un dispositif (10) selon l'une quelconque des revendications 1 à 13 comportant les étapes suivantes :
- Insertion du dispositif d'étanchéité (20), assemblé du moins en partie, dans l'au moins un rail en C (50),
- Déplacement du dispositif d'étanchéité (20), assemblé du moins en partie, jusqu'à ce que l'au moins un corps d'étanchéité (30a, 30b) soit disposé symétriquement à la paroi (40),
- Déformation de l'au moins un corps d'étanchéité (30a, 30b) par application d'une tension à l'aide de la plaque frontale (21), de la plaque de recouvrement (22), de l'élément de fixation (24a, 24b) et du système de serrage (27, 29).
